# EUROPEAN PATENT SPECIFICATION

(11) **EP 0 969 665 B1**
(45) Date of publication and mention of the grant of the patent: **29.05.2002**
(21) Application number: 98440138.0
(22) Date of filing: 22.06.1998
(51) Int. Cl.: H04N 7/16, H04N 7/173

(54) **In-home network for distributing data**
Hausnetzwerk zur Datenverteilung
Réseau domestique pour la distribution de données

(43) Date of publication of application: 05.01.2000
(73) Proprietor: ALCATEL, 75088 Paris (FR)
(72) Inventor: Lecomte, Daniel, F-75116 Paris (FR)
(74) Representative: Knecht, Ulrich Karl, Dipl.-Ing.

(56) References cited:
- EP-A- 0 803 812
- WO-A-96/08912
- WO-A-97/20432
- US-A- 5 654 747
- US-A- 5 768 539

## Description

This invention relates to an in-home network for distributing data, generally video, or audio, or control data, as set forth in the preamble of the main claim.

DE 44 35 766 A1 discloses an in-home network for distributing video and audio signals which additionally permits bidirectional transmission of subscriber-related signals. In the future, the existing networks for distributing video and/or audio signals over coaxial cables up to the subscriber are to be used also for the transmission of subscriber-related digital signals. Examples of such interactive services are video-on-demand, teleshopping, and further multimedia applications. To accomplish this, it will be necessary to transmitt, besides the signals from a center to the subscribers, signals from the subscribers to the center. To connect the in-house networks to the access network, which, in turn, is connected to the center, so-called set-top boxes are used. Such set-top boxes contain modulators and decoders, so that the signals from the access network can be received and decoded. They generally have a control panel through which they can be put in a given operating condition.

Such in-home networks with conventional set-top boxes have the disadvantage that the demodulators and decoders of the set-top box are adapted to the offer of one network provider. From the standpoint of the provider it is understandable that the set-top boxes are designed only for the reception of one specific system. For the customer, however, this situation is unsatisfactory since a conventional set-top box does not readily permit access to new information services or a change to another provider. The in-home network according to the invention, which in its broadest aspect is defined in the main claim, has the advantage that an "open" set-top box is provided which comprises memory units suitable for storing configuration data, so that individual system providers can load configuration data from the access networks into the set-top box and permit decoding and demodulation. Additional flexibility of the in-home network is provided by the connection of the set-top box with a digital broadband matrix. This matrix expands the capabilities of the set-top box as it can be connected to a control unit and/or to different output devices, such as screen devices.

By the measures recited in the subclaims, an improvement of the in-house network claimed in the main claim is possible. Particularly advantageously, the broadband matrix is connected to a control unit in the form of a server. By this, the flexible use is extended for all possible functions in the in-home network. Advantageously, the server has connections for a variety for output and input devices, and different control functions of the in-home technology are incorporated into the server.

Furthermore, it is readily possible to control access to the in-home network via an input/output device in the form of a card reader and a smart card.

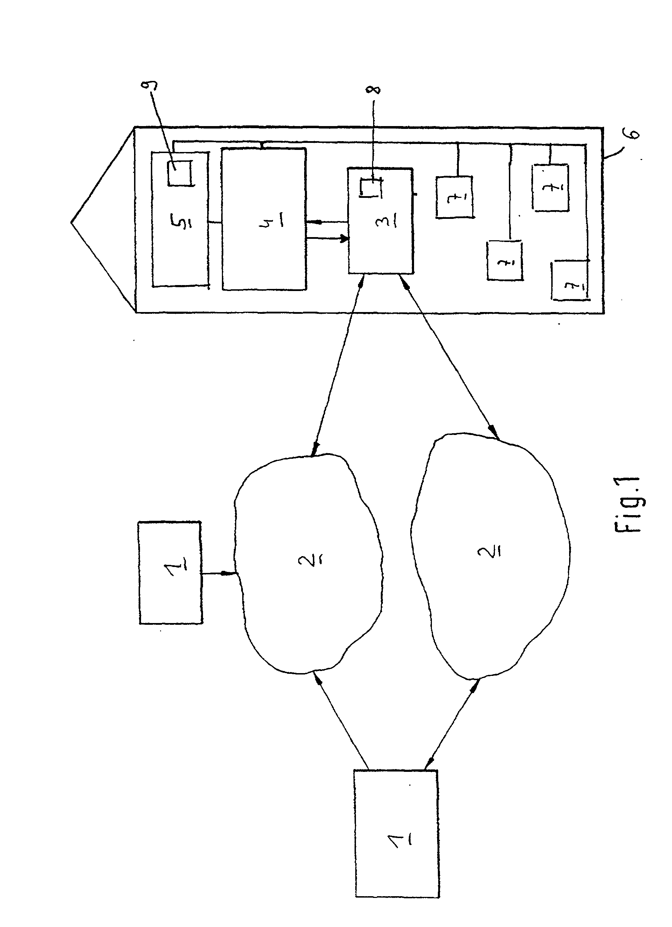

An embodiment of the invention is illustrated in the accompanying drawing and will now be explained in more detail.

The single figure of the drawing is a schematic representation of an in-home network according to the invention and an access network system. Via head ends 1, which feed different data into access networks 2, the data are passed on to a subscriber location 6. The access networks 2 are connected to a set-top box 3. The set-top box 3 includes a memory unit 8 and is connected via a digital matrix 4 to a server 5. The server serves as a control unit for devices 7, which may be input/output devices. The system is a return-channel-capable broadband communications system which makes available interactive services, such as video-on-demand, home banking, teleshopping, etc. A basis for such a communications system may be a cable television network, a sattelite access or an integrated services network such as ISDN. Television and radio programs, for example, are feed from a head end 1 into the distribution network, for example an access network 2, and transmitted to a plurality of subscribers 6. In addition, in response to a request from a subscriber 6, video and audio signals are fed from the head end into the network and transmitted to the subscriber. The request signals are transmitted over the same access network or alternatively over another one. The set-top box serves to receive television and radio programs as well as further video and audio signals which are transmitted through the access network. The set-top box 3 contains demodulating and decoding devices for converting the signals received from the access network. These devices serve to filter out those of the received video and audio signals which are desired by the subscriber. The processing of these signals includes decompressing, demodulating, decoding, and decrypting the signals. The signals may be compressed and/or modulated quite differently. Depending on the provider of the programs, different codes may be present. To make it easier for the subscriber to access different networks, the set-top box includes a memory unit 8 which is specifically designed to store configuration data of the provider.

When the set-top box according to the invention is installed, it has no information on how the data to be received are compressed and modulated. The subscriber will then communicate his or her wish through the access networks to a provider which, in turn, will send the necessary configuration data to the set-top box. There, these initialization data are stored in the specific memory unit 8. The set-top box is thus ready to read the signals and data of this provider and feed them into the in-home network. It is possible to have more than one provider at the same time. The results of the decompression and the demodulation are passed from the set-top box to the broadband matrix. This matrix may be connected to different output devices in the home, particularly a TV system, but also Internet devices e.a.Webphones and VCRs. Furthermore, the matrix may be connected to a multimedia server via which the output devices are connected to the matrix. Thus, it is possible to connect the input/output devices to the digital matrix directly or via the server. If the server is used, integration of further functions for the in-home wiring and in-home technology is possible. The server also performs functions of security technology and automation, such as system powering. Through the centralization via the server, the in-home functions can also be initiated via each input/output device connected to the server. The input/output devices are connected to the digital matrix or the server by wire or wireless connections.

Since the set-top box is configured only by the initialization, access to all conceivable networks, such as ATM networks, ADSL networks, GSM networks, UMTS networks, etc. is possible. To control access to the in-home network, the use of an input/output device in the form of a card reader is conceivable. The card reader is suitable for reading a smart card and allows access to the in-home network to be controlled via an identification code. The smart card can also be employed in paying charges for requested services.

## Claims

1. An in-home network for distributing video and/or audio and/or control data, comprising a set-top box (3) for connecting the in-home network to access networks (2), the set-top box including memory units for storing configuration data of different access networks (2), **characterized in that** the set top box is connected on the home side via a digital broadband matrix (4) to a control unit (5) having inputs and outputs.

2. An in-home network as claimed in claim 1, **characterized in that** the control unit (5) is incorporated in an in-home server.

3. An in-home network as claimed in claim 2, **characterized in that** the server (5) has connections for input and output devices (7).

4. An in-home network as claimed in claim 2 or 3, **characterized in that** the server is connected via the digital broadband matrix (4) and the set-top box (3) to different access networks.

5. An in-home network as claimed in any of claims 2 to 4, **characterized in that** the server (5) has inputs and outputs for different control functions of the in-home technology.

6. An in-home network as claimed in any of claims 2 to 5, **characterized in that** the set-top box (3) or the server (5) comprises a card reader (9) for reading a smart card.

## Patentansprüche

1. Ein In-Haus-Netz zur Verteilung von Video- und/oder Audio- und/oder Steuerdaten, bestehend aus einer Set-Top-Box (3) zum Anschluss des In-Haus-Netzes an Anschlussnetzen (2), wobei die Set-Top-Box Speichereinheiten zur Speicherung von Konfigurationsdaten verschiedener Anschlussnetze (2) enthält, **dadurch gekennzeichnet, dass** die Set-Top-Box auf der Seite des Hauses über ein digitales Breitband-Koppelfeld (4) an eine Steuereinheit (5) angeschlossen ist, die Eingänge und Ausgänge hat.

2. Ein In-Haus-Netz gemäß Anspruch 1, **dadurch gekennzeichnet, dass** die Steuereinheit (5) sich in einem In-Haus-Server befindet.

3. Ein In-Haus-Netz gemäß Anspruch 2, **dadurch gekennzeichnet, dass** der Server (5) Anschlüsse für Eingabe- und Ausgabegeräte (7) hat.

4. Ein In-Haus-Netz gemäß Anspruch 2 oder 3, **dadurch gekennzeichnet, dass** der Server über das digitale Breitband-Koppelfeld (4) und die Set-Top-Box (3) an verschiedene Anschlussnetze angeschlossen ist.

5. Ein In-Haus-Netz gemäß einem der Ansprüche 2 bis 4, **dadurch gekennzeichnet, dass** der Server (5) Eingänge und Ausgänge für verschiedene Steuerfunktionen der In-Haus-Technologie hat.

6. Ein In-Haus-Netz gemäß einem der Ansprüche 2 bis 5, **dadurch gekennzeichnet, dass** die Set-Top-Box (3) oder der Server (5) einen Kartenleser (9) zum Lesen einer Smart-Card enthält.

## Revendications

1. Réseau domestique destiné à la distribution de données vidéo et/ou audio et/ou de commandes, comprenant un boîtier décodeur (3) pour relier le réseau domestique aux réseaux d'accès (2), le boîtier décodeur comprenant des unités de mémoire pour stocker des données de configuration de différents réseaux d'accès (2), **caractérisé en ce que** le boîtier décodeur est relié du côté domestique, par une matrice numérique à large bande (4), à une unité de commande (5) présentant des entrées et des sorties.

2. Réseau domestique selon la revendication 1, **caractérisé en ce que** l'unité de commande (5) est incorporée dans un serveur domestique.

3. Réseau domestique selon la revendication 2, **caractérisé en ce que** le serveur (5) possède des connexions pour des dispositifs d'entrée et de sortie (7).

4. Réseau domestique selon l'une quelconque des revendications 2 ou 3, **caractérisé en ce que** le serveur est relié par la matrice numérique à large bande (4) et le boîtier décodeur (3) à différents réseaux d'accès.

5. Réseau domestique selon l'une quelconque des revendications 2 à 4, **caractérisé en ce que** le serveur (5) présente des entrées et des sorties pour différentes fonctions de commande de la technologie domestique.

6. Réseau domestique selon l'une quelconque des revendications 2 à 5, **caractérisé en ce que** le boîtier décodeur (3) ou le serveur (5) comprend un lecteur de carte (9) pour la lecture de carte à puce.
